Europäisches Patentamt

European Patent Office

Office européen des brevets

⑱

(11) Publication number: **0 142 619**
**B1**

(12) **EUROPEAN PATENT SPECIFICATION**

(45) Date of publication of patent specification: **11.01.89**

(21) Application number: **84108918.8**

(22) Date of filing: **27.07.84**

(51) Int. Cl.⁴: **B 65 B 35/44,** B 65 B 5/06

(54) Article conveying device in a collective packaging machine.

(30) Priority: **28.07.83 JP 138608/83**

(43) Date of publication of application:
**29.05.85 Bulletin 85/22**

(45) Publication of the grant of the patent:
**11.01.89 Bulletin 89/02**

(84) Designated Contracting States:
**DE GB IT**

(56) References cited:
**EP-A-0 036 398**
**US-A-2 738 116**
**US-A-3 570 209**

(73) Proprietor: **Japan Tobacco Inc.**
**2-1 Toranomon, 2-Chome**
**Minato-Ku Tokyo 105 (JP)**
(73) Proprietor: **Sanjo Machine Works Ltd.**
**1300, Oaza Inokobashinden Sakaecho**
**Minamikanbara-gun Niigata 959-11 (JP)**

(72) Inventor: **Hirama, Shigemitsu**
**9-34, Komagome 4-Chome Toshima-ku**
**Tokyo 170 (JP)**
Inventor: **Aida, Satoru**
**106-6, Nishinaka**
**Sanjo-Shi Niigata 955 (JP)**
Inventor: **Somaya, Hideo**
**2-A-13, Takasu-cho 1-Chome**
**Kamo-shi Niigata 959-13 (JP)**

(74) Representative: **Skuhra, Udo, Dipl.-Ing. et al**
**Reinhard, Skuhra, Weise Patentanwälte**
**Leopoldstrasse 51**
**D-8000 München 40 (DE)**

Courier Press, Leamington Spa, England.

## Description

The present invention relates to an article transport and transfer device in a collective packaging machine of a stand-by operation system, said collective packaging machine comprising a main packaging machine, individually delivering equally shaped articles to a subsequent article conveying path terminating at a stopping means, and an auxiliary packaging machine for further processing a collective package of a predetermined number of said articles transferred from said delivery path, each machine having an individual driving source.

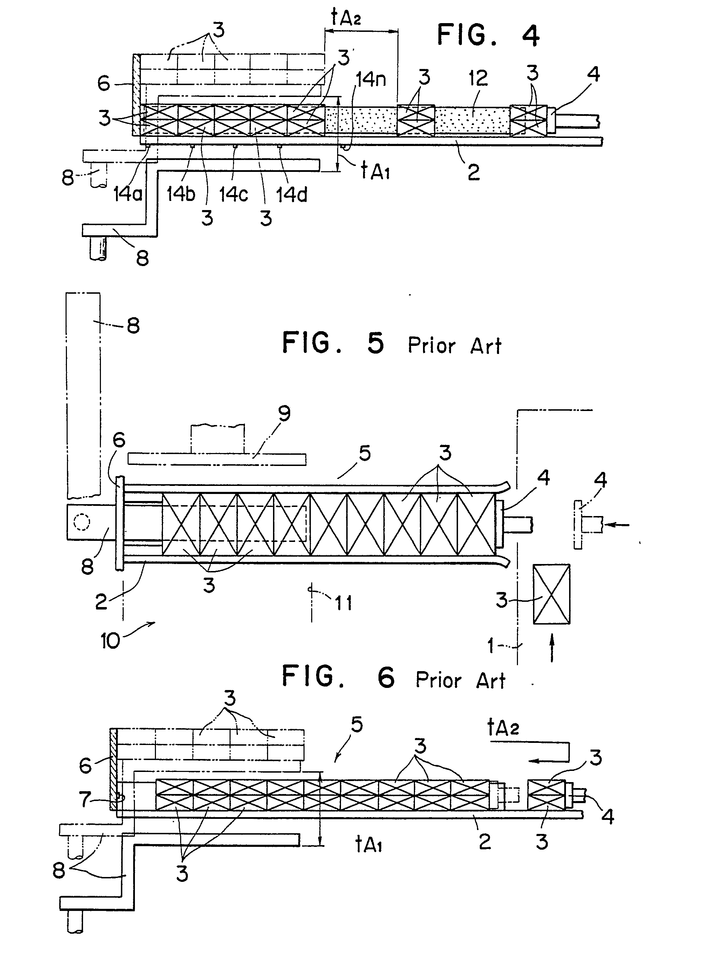

Figures 5 through 7 show a preknown article transport and transfer device in a collective packaging machine of a stand-by operation system, as disclosed also in US-A-35 70 209.

In this preknown device, articles 3 are fed from a main packaging machine 1 to a conveyor plate 2 at regular intervals in two stages by one line and are then pushed by a pusher 4 of the main packaging machine 1 onto an article conveying path 5 on the conveyor plate 2. This process is repeated, and articles are transferred in sequence onto the article conveying path 5. If the first article 3 in the top line abuts a stopper 6 and is detected by a transfer detecting sensor 7, a lifting and turning plate 8 moves upwards to lift the article 3 of n lines, five lines in this case, as shown in Fig. 6. A feed pusher 9 pushes the articles at the upper position and feeds them onto a packaging path 11 of an auxiliary packaging machine 10 as shown in Fig. 7.

The feed pusher 9 returns to its stand-by position, and at the same time the lifting and turning plate 8 is turned by 90 degrees in the horizontal direction and is then turned reversely by 90 degrees in the horizontal direction at the lower position, as shown in Fig. 5, and stopped at the original position below the conveyor plate 2. Thus, the articles 3 are packaged in a collective package at the conveying path in two stages by five lines.

In such an known article transport and transfer device of a stand-by operation system, the relation between the time $t_{A1}$ (i.e. the time, while the first article 3 on the top line abuts the stopper 6 and is detected by the transfer detecting sensor 7 and while the lifting and turning plate 8 begins to move upwards and attains the level where the bottom surface on the lifting and turning plate 8 does not interfere with a feeding of the articles 3) and time $t_{A2}$ (i.e. the time, while the article 3 is fed and pushed by the pusher 4 and abuts the article 3 at the front line, which is transferred) must be as follows:

$$t_{A2} > t_{A1}$$

This condition applies not only to the transfer device in the prior art. The relation between the time $t_{A1}$ necessary for lifting and turning the plate 8 to attain the operational level without interference with the articles in the conveying path, and the time $t_{A2}$ needed for the subsequent article 3 to be fed, restricts the operational speed of any transfer device.

If the above relation is not appropriately considered, a smooth operation will be obstructed due to a collision between the top end of the lifting and turning plate 8 and the last articles 3 delivered to form a collective package.

With the preknown collective packaging machine it is not possible to attain a high speed operation due to the functional principle thereof, which does not allow an appropriate matching of the operation of the main and the auxiliary packaging machine and the forming of the collective packages at an increased speed operation.

It is therefore an object of the present invention to provide an article transport and transfer device in a collective packaging machine of a stand-by operation system which allows an accurate and high speed operation.

Features and a preferred embodiment of the invention are defined in the claims.

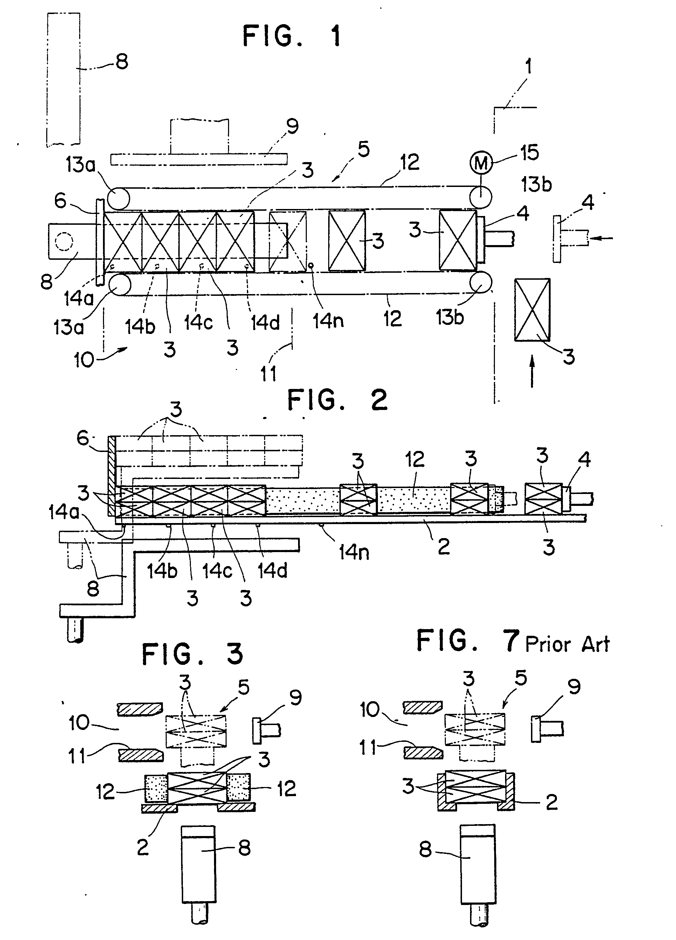

The invention will now be described specifically by way of an embodiment referring to the accompanying drawings of Figures 1 through 4 of Fig. 1-7, wherein like parts to those in the conventional example are designated by identical reference numerals.

Figure 1 is a plan view of main part of an embodiment of the invention;

Figure 2 is a sectional view of the embodiment in lateral direction;

Figure 3 is a sectional view of the embodiment in longitudinal direction;

Figure 4 is a sectional view of the embodiment in lateral direction.

Figure 5 is a plan view of an example in the prior art;

Figure 6 is a sectional view of the prior art in lateral direction; and

Figure 7 is a sectional view of the prior art in longitudinal direction.

The invention concerns a collective packaging machine to perform collective packaging of articles 3 in two stages by five lines (n lines in general) as in the conventional example.

Endless conveyor belts 12 are positioned along both sides of an article conveying path 5. They are led around a front roller 13a and a rear roller 13b. The width of each belt is nearly as large as the height of two articles 3. The belt travelling speed is matched with that of the main packaging machine 1.

Article detecting sensors 14a, 14b, 14c, 14d, ... 14n, photosensors in this case, are used (n designates the ultimate one of a number of n articles). The article detecting sensors 14a, ... 14n are disposed to detect equally shaped articles at defined positions without a gap between the articles of a package, and the article detecting sensor 14n is disposed to detect the n-th article 3 slightly earlier than it attains the defined end position. The mutual distances between the article detecting sensors 14a, ... 14n is made broader than the width of each individual article 3.

The article detecting sensor 14n generates a signal upon sensing said ultimate article, which signal initiates starting operation of said auxiliary packaging machine 10 to assure the continuous synchronous operational cycles of both the main and the auxiliary packaging machine. Thus, delay of the auxiliary packaging machine 10 at the start thereof from the stand-by state, caused by clutch slip, can be made to satisfy the condition $t_{A2} > t_{A1}$ by generating the operation starting signal slightly earlier than the ultimate article attains its defined end position for optimal matching of the delivering of articles from the main packaging machine, forming a collective package of a predetermined number of said articles delivered to the subsequent article conveying path and the transferring and further processing by the auxiliary packaging machine 10.

The continuous synchronous operational cycles of both the main and the auxiliary packaging machine are thus assured accurately even at high speed operation. The control of continuous synchronous operational cycles can be easily performed even at high speed operation, and due to the handling of the articles with the forming of the collective package of a predetermined number of said articles 3, misalignments of individual articles within said collective package can be prevented successfully.

Although the embodiment discloses a horizontal transfer device for a collective package of articles, the invention may also be applied to a vertical transfer device.

## Claims

1. An article transport and transfer device in a collective packaging machine of stand-by operation system, said collective packaging machine comprising a main packaging machine (1), individually delivering equally shaped articles (3) to a subsequent article conveying path (5) terminating at a stopping means (6), and an auxiliary packaging machine (10) for further processing a collective package of a predetermined number of said articles (3) transferred from said delivery path (5), each machine (1; 10) having an individual driving source, said article transport and transfer device being characterized by a grasping belt (12) arranged on both sides of the article conveying path (5), a speed-variable driving source (15) for the grasping belts (12), the travelling speed of said grasping belts (12) being controlled to be in synchronism with that of the main packaging machine (1), and article detecting sensors (14a, 14b, ... 14n) disposed along the article conveying path (5) to detect a contiguous series of n articles (3) at defined end positions, the ultimate one (14n) of said article detecting sensors (14a, ... 14n) being disposed away from the adjacent sensor (14n-1) by a distance longer than the distance between the other sensors for detection of the ultimate article (3) of said collective package shortly before this ultimate article (3) reaches its defined end position in said collective package, said ultimate one of said article detecting sensors generating a signal upon sensing said ultimate article which signal initiates starting operation of said auxiliary packaging machine (10) to assure the continuous synchronous operational cycles of both the main and the auxiliary packaging machine.

2. A device according to claim 1, characterized in that each mutual distance between the article detecting sensors (14a, ... 14n) is made broader than the width of one article (3).

## Patentansprüche

1. Artikeltransport- und -transfervorrichtung für eine Sammelpackmaschine nach dem Bereitschafts-Betriebssystem, wobei die Sammelpackmaschine eine Hauptpackmaschine (1), welche gleichmäßig geformte Artikel (3) einzeln zu einer sich anschließenden Artikel-Transportbahn (5) befördert, die an einer Anschlageinrichtung (6) endet, und eine Hilfspackmaschine (10) aufweist, um eine Sammelpackung aus einer vorbestimmten Zahl dieser Artikel (3) weiter zu verarbeiten, die von der Transportbahn (5) zugeführt wurden, wobei jede Maschine (1; l0) eine eigene Antriebsquelle besitzt, wobei die Artikeltransport- und -transfervorrichtung gekennzeichnet ist durch ein Greifband (12), welches an beiden Seiten der Artikeltransportbahn (5) angeordnet ist, eine Antriebsquelle mit regulierbarer Geschwindigkeit (15) für die Greifbänder (12), wobei die Laufgeschwindigkeit der Greifbänder (12) derart kontrolliert wird, daß sie synchron zu der der Hauptpackmaschine (1) ist und durch Artikelerfassungs-Sensoren (14a, 14b, ... 14n), die entlang der Transportbahn (5) angeordnet sind, um eine benachbarte Serie von n Artikeln (3) an festgelegten Endstellungen zu erfassen; wobei der letzte (14n) dieser Sensoren (14a, ... 14n) vom benachbarten Sensor (14n-1) in einem größeren Abstand ist als der Abstand zwischen den anderen Sensoren für das Erfassen des letzten Artikels (3) der Sammelpackung, kurz vor dessen Erreichen seiner definierten Endstellung in dieser Sammelpackung angeordnet ist, wobei der letzte dieser Artikelerfassungs-Sensoren erzeugt beim Erfassen dieses letzten Artikels ein Signal erzeugt, welches den Betriebsstand der Hilfspackmaschine (10) für das Sicherstellen der kontinuierlichen synchronen Betriebszyklen sowohl der Hauptals auch der Hilfspackmaschine auslöst.

2. Vorrichtung nach Anspruch 1, dadurch gekennzeichnet, daß der gegenseitige Abstand zwischen den Artikelerfassungs-Sensoren (14a, ... 14n) größer ist als die Breite eines Artikels (3).

## Revendications

1. Dispositif de transport et de transfert d'objets pour une machine d'emballage groupé fonctionnant selon le mode marche-attente, ladite machine d'emballage groupé comprenant une machine d'emballage principale (1) qui amène individuellement des objets (3) de même forme

sur une piste subséquente de convoyage (5) d'objets aboutissant à un moyen d'arrêt (6) et une machine d'emballage auxiliaire (10) pour procéder ensuite à un emballage groupé d'un nombre prédéterminé desdits objets (3) qui ont été amenés par ladite piste de convoyage (5), chaque machine (1; 10) possédant un moyen d'entraînement propre, ledit dispositif de transport et de transfert d'objets étant caractérisé par une bande préhensile (12) placée sur deux côtés de la piste de convoyage (5) d'objets, par une source motrice (15) à vitesse variable destinée aux bandes préhensiles (12), la vitesse de déplacement desdites bandes préhensiles (12) étant commandée en synchronisme avec celle de la machine d'emballage principale (1), et par des capteurs de présence d'objets (14a, 14b, ... 14n) disposés le long de la piste de convoyage (5) d'objets, pour détecter une série de n objets (3) contigus se trouvant à des emplacements finals déterminés, le dernier (14n) de ces capteurs de présence (14a, ... 14n) d'objets étant séparé du capteur voisin (14n-1) par une distance supérieure à la distance entre les autres capteurs, afin de détecter le dernier objet (3) dudit emballage groupé peu avant que ce dernier objet (3) n'atteigne son emplacement final déterminé dans ledit emballage groupé, ledit dernier de ces capteurs de présence d'objets engendrant un signal lorsqu'il détecte ledit dernier objet, lequel signal provoque la mise en marche de ladite machine d'emballage auxiliaire (10) de façon à assurer en continu les cycles de fonctionnement synchrones des deux machines d'emballage, principale et auxiliaire.

2. Dispositif selon la revendication 1, caractérisé en ce que chacune des distances mutuelles entre les capteurs de présence (14a, ... 14n) d'objets est supérieure à la largeur de l'un de ces objets (3).

# FIG. 1

# FIG. 2

# FIG. 3

# FIG. 7 Prior Art

FIG. 4

FIG. 5 Prior Art

FIG. 6 Prior Art